# EUROPEAN PATENT APPLICATION

(11) **EP 2 614 947 A1**
(43) Date of publication of application: **17.07.2013**
(21) Application number: 10849875.9
(22) Date of filing: 15.04.2010
(51) Int. Cl.: B29C 49/04, C08K 3/04

(54) **CHARCOAL-CONTAINING PLASTIC PACKING MATERIAL AND METHOD FOR MANUFACTURING SAME**

(30) Priority: 13.04.2010 KR 20100033784
(71) Applicant: Korea Composite Technology Co. Ltd., Duckjin-Gu Jeonju 561-844 (KR)
(72) Inventor: PARK, Haeng Su, Yongin-si Gyeonggi-do 446-908 (KR)
(74) Representative: Zardi, Marco
(86) International application number: PCT/KR2010/002345
(87) International publication number: WO 2011/129470

(57) **Abstract**

The present invention relates to a charcoal-containing plastic packing material and to a method for manufacturing same. The present invention provides a plastic packing material which resolves the problems caused by the immiscibility of charcoal and resin, such as deficiencies in mechanical properties, an aggregation phenomenon, foreign body sensation, defective forms, and poor quality, and which not only exhibits high-level general qualities, but which also, as a result of containing charcoal, has functional properties such as suppressing putrefactive bacteria, absorbing polluted particles and smells, radiating far-infrared rays and anions, and preventing the generation of static electricity. Also, the present invention provides a method for manufacturing a plastic packing material, in which the particle size, the amount used for resin, and the particle size uniformity of charcoal powder to be mixed with resin are adjusted in accordance with the thickness of the plastic packing material to be formed.

## Description

Functional materials present invention relates to plastic packaging containing, in particular plastic packaging containing charcoal and a preparation method thereof.

**BACKGROUND**

Lightweight plastic packaging materials, packing materials suitable properties such as confidentiality, excellent workability, it has advantages such as economics today is widely used as a packaging material. In recent years, in addition to plastic packaging features a simple package contents (food, etc.) suppression of corruption, such as freshness attempt is made to add the functionality is For example, the contents (food, etc.) in order to maintain the freshness of a long perforated to create a fine film, film various functional materials (for example, minerals, mineral powder, charcoal, spices, etc.) as a way to contain the have been tried.

Among the above-mentioned functional materials charcoal powder, caused inhibition of putrefactive bacteria, dirt particles and odor adsorption capacity, far infrared and negative ion radiation, anti-static as it has several advantages have been noted. In Korea Patent No. 10-0302957 polyethylene or polypropylene resin particle size less than 20 µm charcoal powder at a rate of 1-40% of the volume in the form of pellets, chips made by mixing the two chips as raw material, the injection or blow molding method containing charcoal as a method for manufacturing plastic containers are announcements. In addition, the Korea Patent No. 10-0828585 500-4000 charcoal crushed to the size of the mesh and pulverized, and then the charcoal powder is mixed with resin and dispersing agent to remove water and then molded into the chip, and the chip the film in the form of extruded plastic and is a method of preparing announcements. Korea Patent No. 10-0623495 ocher and charcoal in the ground and powdered and then mixed with resin chiphwa with dispersant and, again, the chips are mixed with resin and other additives in a way a way to manufacture plastic film Notice are.

However, the resin powder as a raw material, plastic packaging material containing charcoal powder charcoal Once at the interface between the particles and the polymer resin tears occur frequently, forming defect occurs, or the fluidity of the melt dropped two specific areas charcoal powder focus on such poor quality that presents a problem. This causes the inside of the porous structure of charcoal powder is hydrophilic (hydrophilic) material apparent specific gravity (Bulk Density) of approximately 0.3, while lower, plastic resins with high viscosity hydrophobic (hydrophobic) material as a proportion of 0.9 to 1.2 increases with the powder of charcoal and plastic resin miscible (Compatibility) is that this is not good. Thus, simply by mixing these two substances in a way that the charcoal powder uniformly dispersed in resin can not afford. Korea Patent No. 10-0302957 selected as the name of the present applicant is mixing resin and charcoal with a particle size of less than 20 µm fine powdered solve these problems by a large part, especially due to the porosity of charcoal containing the problems caused has been resolved. However, how to arc Korea Patent 10-0302957, despite charcoal and resin miscibility problems still remain due to the lack, especially charcoal powder particles at the interface between polymer resin and tear or cosmetic defects, certain parts charcoal powder focused on the problems of poor quality still natananeunde, these problems, especially in the form of a film, vinyl can appear more prominently.

**A detailed description of the invention**

### Technical challenges

The inventors of the present invention to lack of charcoal and resin miscible lack the mechanical properties, stiffness symptoms (discomfort), cosmetic defects, such as poor quality in the process of trying to solve the problem forming these issues differently, depending on the thickness of the plastic packaging was found that appears. The inventors of the present invention, where the further development of plastic packaging materials, depending on the thickness of the plastic resin and charcoal particle size of the powder mixing, the resin on usage, by controlling the uniformity of the particle size of charcoal and resin miscible resolve problems that occur due to lack of to know that you can have completed the present invention. The invention of charcoal and resin mechanical properties that occur due to lack of miscibility tribe, aggregation phenomena and discomfort, cosmetic defects, solve the problems of poor quality and mechanical properties, formability, excellent physical properties, such as packaging materials and at the same time as the general containing charcoal suppress the putrefactive bacteria, dirt particles and odor absorption, far infrared and negative ion emission, with functionality such as anti-static plastic packaging is to provide. The present invention also maintains packaging properties as a charcoal-containing functional plastic packaging such film, sheet, molded in the form of a variety of containers is to provide.

**Technical Solution**

In the present invention, depending on the thickness of molded plastic packaging resin and mixing charcoal particle size of the powder, resin on usage, control of particle size uniformity, and provides a method for the manufacture of plastic packaging.

Specifically, in the present invention,

Average diameter of 13 µm (1000mesh) is less than 95% charcoal powder with a particle uniformity of 0.2 to 1% by weight of polymer resin during the mixing as incorporated into, the miscible resin-charcoal blend cargo thickness of 0.01 mm - 0.11 mm molding of plastics, including those containing charcoal thickness of 0.01 mm - 0.11 mm to manufacture plastic packaging materials are provided.

In the present invention,

Average diameter of 28 µm (500mesh) or less and more than 90% of the charcoal powder with a particle uniformity in polymer resin containing 1-5% by weight as by mixing, the mixing resin-charcoal blend cargo thickness of 0.12 mm ~ 2.0 mm molding of plastics, including those containing charcoal 0.12 mm ~ 2.0 mm thickness of plastic packaging is provided a method of manufacturing.

In the present invention,

Average diameter of 43 µm (325mesh) or less and more than 80% of the charcoal powder with a particle uniformity in polymer resins containing 1-14% by weight as by mixing, the mixing resin-charcoal blend cargo than 2.0 mm thickness of plastic molding Charcoal, including those that contain more than 2.0 mm thickness of the plastic packaging is provided a method of manufacturing.

**Favorable effect**

In the present invention, the miscibility of heterogeneous powder charcoal and resin mechanical properties that occur due to lack of degradation, aggregation phenomena (discomfort), molding defects, solve the problem of poor quality, and mechanical properties, formability, surface condition typical of plastic packaging materials, etc. while maintaining the properties and marketability due to inclusion of charcoal with a charcoal-containing functional plastic packaging functionality is provided. The packaging of the present invention inhibit putrefactive bacteria, dirt particles and odor absorption, far infrared and negative ion radiation, anti-static as it has the functionality of, arising from food odors and can significantly reduce ammonia gas and slow down the progress of decay, fresh can be used as an antibacterial storage and archival purposes, and in particular many fruits, including apples and pears to suppress the ripening of fruit coming from the adsorption of ethylene gas to maintain the freshness functional packaging materials (nanjwa, etc.) can be used. In addition, the packaging of the present invention, a lot of the usual vinyl static electricity problem that is solved by the charcoal-containing ingredients, such as for automatic packaging and a separate anti-static treatment to replace the common plastic packaging perfect antistatic function that can be used as automatic packaging plastic packaging materials.

**Brief Description of the Drawings**

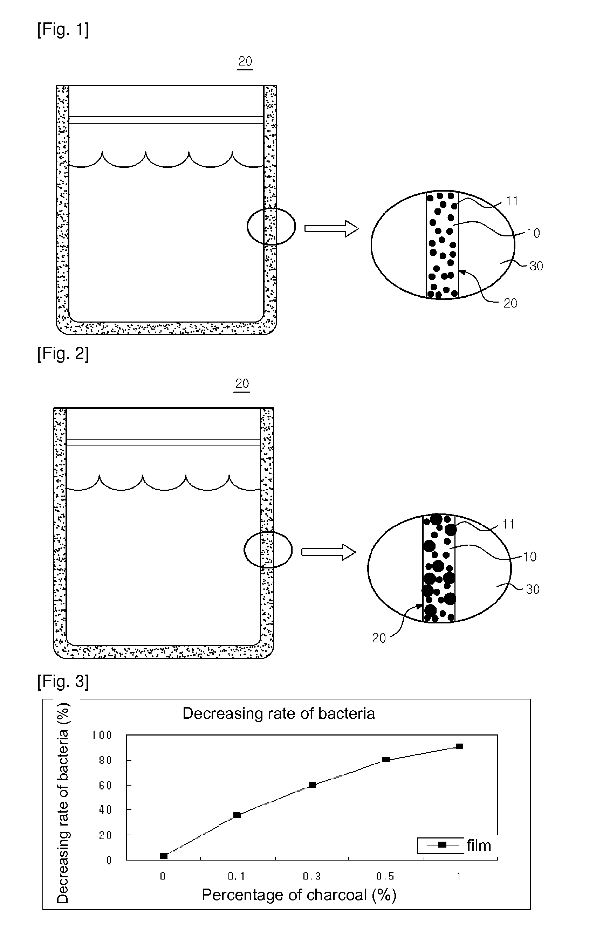

Figure 1 of the present invention prepared in Preparation Example 1 packaging enlarged schematic organization of the state, and also the two do not control the particle size and uniformity charcoal particles are not distributed evenly, if the state of the organization, showing the schematic diagram of an exemplary is

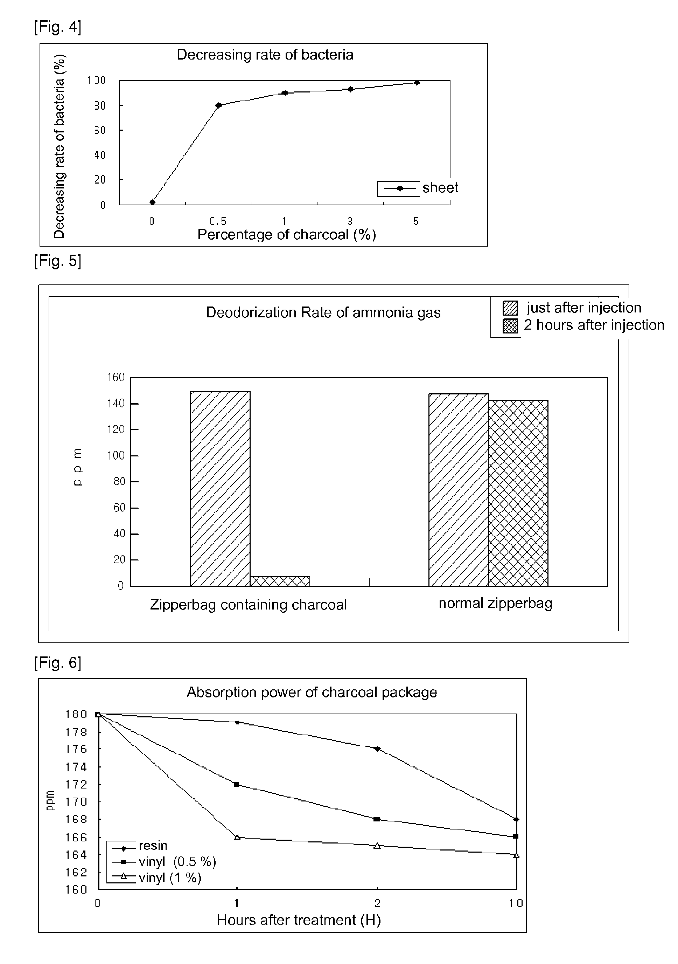

3 and 4 the amount of charcoal in the packaging according to the bacterial reduction compared to 3 is a graph showing the results of testing of packaging film and sheet packaging Figure 4 is the result of the test.

Figure 5 of the present invention is manufactured by General packaging materials and ammonia gas according to the elapsed time is a graph comparing the deodorizing effect.

6 is also produced by the present invention and the elapsed time from the package according to the amount of charcoal, ethylene gas is a graph comparing the effects of the takeover.

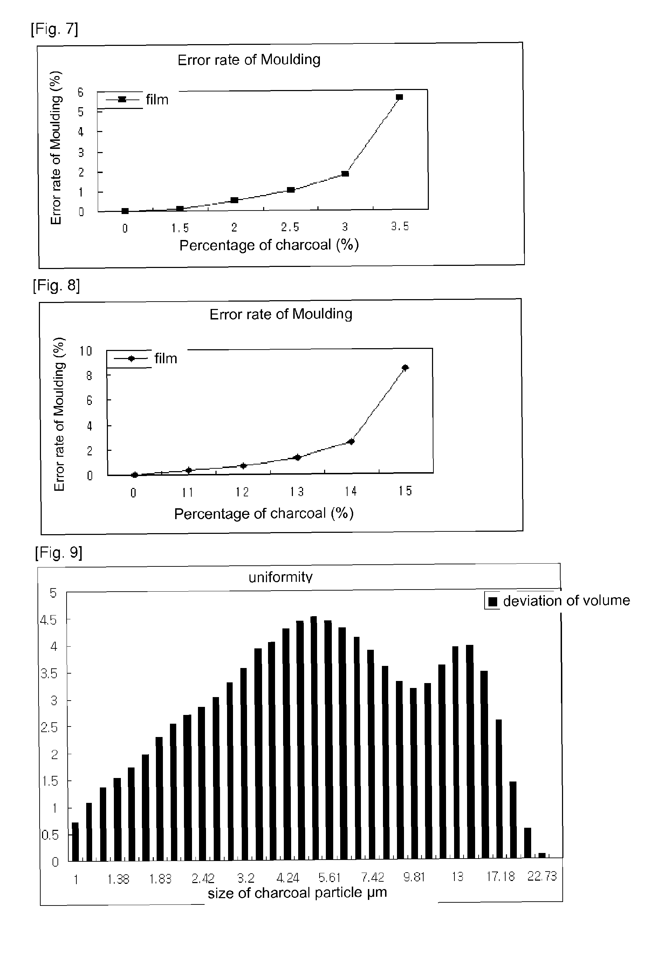

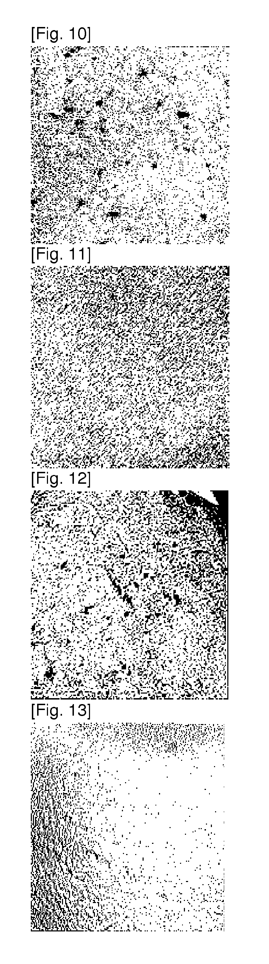

7 and 8 of the present invention is manufactured by molding according to the amount of charcoal from the package graph showing the defect, the test results of Figure 7 is a packaging film, packaging also the seat of the test is the result of eight.

9 is charcoal powder with a particle size distribution is shown to measure.

10 to 13 degrees from the packaging charcoal powder particles according to the uniformity of the difference between the surface of the packaging material to enlarge the pictures taken by the state, 10 and 11 photos of the film packaging and packing materials 12 and 13 of the sheet photo is

14 degrees according to the content of charcoal in antistatic packaging efficacy is a graph showing the results of the test.

<A drawing of the sign on the main part of the description>

10: 11 polymer resin: powder charcoal particles

20: Vinyl Packaging 130: Contents

**Best Mode for Carrying out the Invention**

**Charcoal powder particle size**

Numerous pores so the charcoal is formed, molded (injection molding, extrusion, vacuum casting, apgong, coating, etc.), depending on when the temperature rise of the air from the charcoal inside the pores swell and release occurs when the pinhole, which leads to degradation and poor. In the present invention, this is the pinhole problem occurs charcoal powder particles emitted from the pores of the air flow and thickness of the product to be due to the different correlations gatgi report, in order to prevent the occurrence of pinholes that are molded plastic packaging, depending on the thickness of the powder particles of charcoal are different sizes. 0.01 mm - 0.11 mm thickness of the plastic, the average diameter of the particles charcoal powder 13 µm (1000mesh) or less, preferably the average diameter is 2 - 13 µm. 0.12 mm - 2 mm thickness of the plastic, the average diameter of the particles charcoal powder 28 µm (approximately 500mesh) or less, preferably the average diameter is 5 - 28 µm. If more than 2 mm thickness of the plastic charcoal powder particles mean diameter 43 µm (325mesh) or less, preferably the average diameter is 10 ~ 43 µm.

**The content of charcoal powder particles**

Containing charcoal powder charcoal-containing plastic packaging packaging must not undermine the basic practicality of merchantability may have. 0.01 mm - 0.11 mm thickness of the plastic, for example, in the form of blow-molded plastic film, which can be, mainly for packaging foodstuffs, including vegetables may be used. Plastic packaging bags used for this purpose, by default, a considerable degree of transparency is required. Resin content in the coal when 0.2 to 1% by weight, while maintaining the functionality of charcoal visible transparency and marketability as plastic packing bag can be secured.

0.12 mm - 2 mm thickness of plastic, for example, can be extruded sheet products, which this type of product was thinner than injection molding products, mainly container, including a one-time strong ingredients such as fruit packing nanjwa can be used. Sheet charcoal content of the resin in the range of 1-5% by weight of a stable sheet extrusion and sheet extrusion mass production and apgong or coating can be obtained. In addition, a minimum of 2.4 wt% or less transparency to ensure that the contents are visible.

More than 2 mm thickness of plastic, for example, sealed containers, bins, recycle containers, injection molded products can be. Strong nature disposable plastic film and sheet products in the form of injection, unlike the mechanical properties of the product are important. The mechanical properties of injection products, tensile strength, elongation, impact strength, hardness, etc., which summarizes the resin content in the charcoal, if you use less than 14% by weight of charcoal and overcome problems caused by mixing of the mechanical properties and the general packaging and a large do not differ. Preferably, the resin content in the coal is 5-14% by weight.

**Uniformity of charcoal powder particles**

In addition, the uniformity of charcoal powder particles to minimize the problems caused by mixing elements is important. If the particle size distribution of a typical powder charcoal particles, I average five times more than the fine particles and forces, including about 15%, while the average about 10% larger than the group of particles that are included so that was confirmed by particle size analysis. Than the average in the case of fine particles due to the volume variation in the form on the surface of the sediment will remain cloudy, and that powdered charcoal and color master batch uniformity when used at the same time as the difference between the color difference is the cause of poor quality leads. While larger than the average particle discomfort due to poor quality of the two groups is displayed.

Thickness as thin plastic packing bag is required if the visible transparency, uniformity of particles by large particles fall if the discomfort is revealed visually. Thus, the thickness of 0.01 mm - 0.11 mm plastic particle agglomeration (discomfort) to prevent the phenomenon of mass production in order to secure uniformity of 95% or more particles are required. Also, compared to the relatively thick plastic packing bags of transparency needs less visible thickness of 0.12 mm - 2 mm uniformity of sheet products, such as more than 90% of the particles in the agglomeration (discomfort) blocking phenomenon can ensure the stability of quality. In addition, more than 2 mm thickness in the case of injection products the important mechanical properties and permeability than the thicker plastic or sheet product with a milder particle uniformity is possible, is the preferred particle uniformity is over 80%.

Charcoal of the present invention, a method of manufacturing plastic packaging containing the powder by mixing charcoal and resin plastic molding method, fine powder, charcoal and resin immediately after mixing, and how plastic molding, powdered charcoal and resin before After you create a master batch mixing the master batch to suit the desired products to molded plastic is all. In the latter case, preferably a polymer resin and charcoal powder in a vacuum kneading extruder extrusion took the form of a master batch chip created by the two chip blow molding, extrusion molding, injection molding, plastic molding are a variety of ways, such as. In the present invention, the polymer resin powder in mixing the charcoal, PE (polyethylene); PP (polypropylene); ABS (acrylonitrile butadiene styrene copolymer); OPP (Oriented polypropylene); PET (polyethylene terephthalate); PC (polycarbonate); PS ( polystyrene); PSP (polystyrene paper); GPPS (general purpose polystyrene), etc., alone or in a mixture of two or more thereof may be used.

In the present invention, the term "plastic packaging" regardless of the form that can be used as packaging or storage purposes shall mean all plastic products, for example, in the form of film, plastic packaging bags, wrap, coated, plastic re-sealable bag, a seat in the form of one-time or Multi-use containers, nanjwa, fruit packaging, sealed containers, hard plastic containers and the like.

[Example]

With less specific embodiments of the present invention will be described in more detail. However, these embodiments of the present invention is only to be described in more detail, the scope of the present invention is not limited by these examples is not

**Preparation Example 1**

Plastic packaging bag manufacturer

In the polyethylene resin compounding machine to 100kg with an average diameter of approximately 10 µm and 97% charcoal powder with a particle uniformity, while putting 0.5kg vacuum resin and charcoal powder extrusion mixing master batch made in the form of a chip. This master batch made of blow molding to create a film thickness of 0.05 mm, the film foundation containing the charcoal made of polyethylene plastic re-sealable bag.

The prepared plastic packing bag (plastic re-sealable bag) cross-section is shown in the schematic diagram in FIG. Prepared according to the present invention, depending on the thickness of the packaging material by controlling the particle size and particle size distribution on the surface of coal particles do not stick a whole bunch of surfaces packaged bag or can remain smooth without discomfort. Figure 2, while the charcoal particles are not evenly distributed particle size is not appropriate because the charcoal particles on the surface of the extruded state as illustrated exemplarily, charcoal Loose In these states, and foreign body sensation, charcoal and resin portion of the tangent physical properties, such as the issue of degradation appears you will not be able to function as packaging.

**Preparation Example 2**

Production of fruit packaging nanjwa

In the polyethylene resin compounding machine to 100kg with an average diameter of about 92 percent and 20 µm particle uniformity, while putting a 2kg powder charcoal and charcoal powder resin extruded under vacuum mixing master batch made in the form of a chip. This master batch made of extruded sheets of 0.8 mm thickness, making the fruit packing apgong two sheets made nanjwa.

**Preparation Example 3**

The manufacture of sealed containers

In the polyethylene resin compounding machine to 100kg with an average diameter of approximately 35 µm and 85% charcoal powder with a particle uniformity, while putting 7kg vacuum resin and charcoal powder extrusion mixing master batch made in the form of a chip. This master batch made of injection-molded thickness of 3 mm made airtight container.

**Experimental Example 1.**

Bactericidal test

(1) sterilization of the film

Manufactured in the same manner as in Example 1 and contained in the polyethylene resin content of charcoal powder, but 0 wt%, 0.1 wt%, 0.3 wt%, 1 wt% were prepared to back the plastic wrap prepared in Preparation Example 1 was 0.5 wt% packed with bags and charcoal content was tested by comparing the bactericidal activity. How to close a pressurized sterilizing the bacterial reduction was measured. Test inoculum Politics 24 hours after incubation at 25 °C bacteria were measured using the sample area were published in 60 cm² E. coli strains ( *Escherichia coli*) ATCC 25922 was to. The results are also three. Containing 0.1 % charcoal, sterilizing at 40%, and 0.5% contained at 81% sterilization, sterilization time containing 1% to 93%, with the increase of the content of charcoal powder, bacterial reduction greatly increased charcoal content of more than 0.5% in the limit sterilizing was bodily. The other hand, increased charcoal content of the product so as to be difficult to confirm the contents, depending on the transparency was the fall. Therefore, when considering the marketability of the product coal during the resin content of about 0.2 to 1 wt% was considered appropriate.

(2) sheets of sterilization

The same manner as in Preparation Example 2 contained in the polyethylene resin and the amount of charcoal powder, but 0 wt%, 0.5 wt%, 1 wt%, 3 wt%, and 5% by weight of the sheet was prepared in accordance with the charcoal content of sterilization comparison was tested. How to close a pressurized sterilizing the bacterial reduction was measured. Test inoculum Politics 24 hours after incubation at 25 °C bacteria were measured using the sample area were published in 60 cm² E. coli strains ( *Escherichia coli*) ATCC 25922 was to. The results are listed in Figure 4, and the content of the film as well as charcoal powder decrease with the increase of bacteria was increased. Charcoal content of the resin during the 1-5 wt% was considered appropriate. Meanwhile, the content of charcoal increases the transparency of the product, which fall, less than 2.4% by weight of at least were able to ensure transparency.

**Experimental Example 2**

Deodorizing test

Manufactured in the same manner as in Example 1 and contained in the polyethylene resin powder 10 001 % by weight of the amount of charcoal is created by plastic packing bag (packaging) and general packaging materials that do not contain charcoal deodorizing effect of the ammonia gas were compared according to the elapsed time. The test method containing charcoal deodorant packaging and general packaging them in 5L containers put 150ppm ammonia after 120 minutes, according to the elapsed time talchwiyul the meditation was measured by gas detector. Test results are also 5. If plain packaging of test results after 120 minutes, compared to 145ppm ammonia gas concentration in the case of packaging containing charcoal 4ppm ammonia gas talchwiyul a whopping 97% of the previous year was very good. The results of the present invention containing charcoal odor and meat packaging material suggests very useful for storage.

**Experimental Example 3**

Ethylene adsorption capacity test

Manufactured in the same manner as in Example 1 and contained in the polyethylene resin powder charcoal content of 0.5 wt%, 1 wt% of charcoal is created by not containing plastic packaging bags and plastic (resin) compared to target of ethylene adsorption capacity was tested. For the first test not containing charcoal vinyl ("resin" displayed in: control group), and two kinds of packaging containing charcoal (charcoal powder 0.5%, respectively, containing 1%) to the same standard (15 x 5cm) and then cut into, 2L Put it in an airtight container, each gas capture using a syringe 180ppm ethylene gas was injected into the vessel. Then, 10 hours at room temperature ethylene content in the container were investigated. Ethylene content in the vessel GC (Hewlett Packard 5890 II ) were measured by. The condition column oven temperature 200 °C, FID detector temperature at 200 °C were measured by injecting 0.5mL increments, column a Carboxen^{™} 1006PLOT, 30 m x 0.53 mm (Supelco Inc.., USA) was used. The results are also 6.

Ethylene content stored in the container after 1 hour, whereas in the control group decreased slightly to 179ppm, containing 0.5% charcoal powder in plastic 172ppm, and 166ppm of the vinyl containing 1% significantly decreased. The results of ethylene affecting the quality of the product at the beginning (after one hour) when the adsorption or removal may increase the long-term study retention rates (jeongcheonsun jeong, CS, SM Park, and WH Kang. 2003. Effects of charcoal -added functional paper on keeping leafy lettuce fresh during marketing. Kor. J. Hort. Sci. Technol. 21:102-105.) In view of the packaging if you use charcoal containing lead may indicate a remarkable freshness that means. The storage period is extended in accordance with the ethylene content significantly decreased in all treatments was confirmed that, due to the gas permeability of the packaging material itself is believed.

**Experimental Example 4**

Formability test in accordance with charcoal content

(1) Film Forming

Manufactured in the same manner as in Example 1 and contained in the polyethylene resin content of charcoal powder, but 0 wt%, 1.5 wt%, 2 wt%, 2.5 wt%, 3 wt%, 3.5 wt%, while manufacturing and molding plastic packaging bags evaluated. The results are also 7. In the case of vinyl content of less than 3% charcoal powder forming a fabric defect rate to less than 2% showed a stable molding, raised more than 3% of the pinhole as the fabric forming a rapidly increasing failure rate was 8%.

(2) sheet molding

The same manner as in Preparation Example 2 and the particle size of approximately 28 µm using charcoal powder and charcoal powder contained in the polyethylene resin content of only 1 wt%, 11 wt% and 12 wt%, 13 wt%, 14 wt% and 15 wt. % were molded into sheets. The sheet thickness of 0.92 mm by vacuum molding food containers (145 * 195 * 95 mm) while making the content of charcoal powder was evaluated according to the cosmetic defect. The results are also 8. So by increasing the content of charcoal powder also increases defect jyeotneunde, charcoal powder content of less than 14% to less than 3% in the error rate somewhat stable formability showed more than 14% in the pinhole and a decrease in the dispersion of charcoal powder is increased dramatically resulting in a 10% failure rate that was close.

Charcoal powder in both film and sheet, the higher the content of the physical properties of the high failure rate decreases were forming.

**Experimental Example 5**

According to particle size of charcoal powder molding uniformity teat

(1) uniformity of the particle size of charcoal powder

First, the raw material used to evaluate the uniformity of the particle size of the powder was charcoal. The average particle size (diameter) 13 µm (1,000 mesh) powder of charcoal, the uniformity of Beckman Coulter's LS 13320 particle size analyzer (Laser diffraction method) in the range of 0.4 - 20.0 µm were measured by dry. The results are listed in Figure 9, and the uniformity of the particle distribution was wide are formed. The average particle size of 43 µm (325mesh) and 28 µm (500mesh) about the uniformity of the powder was measured charcoal, also 13 µm (1,000 mesh) showed a similar distribution.

(2) uniformity of the particle size of charcoal powder in the surface condition of the packaging

Manufactured in the same manner as in Example 1 and contained in the polyethylene resin powder charcoal particle size 13 µm (1000mesh) and particle uniformity, respectively, less than 80% to more than 95% of those using the plastic packaging film was baekyong. Close-up shoot of the film formed on the surface, and the results in each of the 10 and 11, respectively. Uniformity of particles less than 80% due to the rough surface of the charcoal powder charcoal powder bury the symptoms appeared out of merchantability dropped significantly, while more than 95% uniformity was found to have a clean surface.

Also, while the same manner as in Preparation Example 2 containing polyethylene resin particle size of the powder charcoal 28 µm (500mesh) and particle uniformity is less than 80% to more than 90% of that in the form of the sheet was extruded. Enlarge the surface of the molded sheets were taken, and the results for each of 12 and 13, respectively. Uniformity of particles less than 80% due to the rough surface of the charcoal powder charcoal powder bury the symptoms appeared out of merchantability dropped significantly, while more than 90% uniformity was found to have a clean surface.

(3) the resin contained in the charcoal powder in about the same average particle size and particle size uniformity, only Unlike injection molding, extrusion molding, vacuum molding, blow molding, molded in various forms in the way of results in the same average particle size of particles Depending on the size uniformity and a thin vinyl sheet products was observed in the occurrence of discomfort. In addition, through the evaluation of the impact of these uniformity to the following conclusions were obtained.

① thickness of 0.01 mm - 0.11 mm or less in the case of plastic products, a variety of charcoal powder with particle size and uniformity of the product through a variety of plastic blow molding a result, the particle size of charcoal powder 13 µm (1000mesh) the appearance of a foreign body sensation or less and marketability of aggregation phenomena to be affected by the uniformity of particles showed more than 95% of particles from the discomfort and stiffness uniformity phenomenon that could secure the excellent appearance of merchantability.

② less than 0.12 mm - 2 mm thick extruded sheet products, the particle size of 28 µm (500mesh) and later, the discomfort caused by irregular particles could not be resolved. Thus, the particle size at least 28 µm (500mesh), and less than, 28 µm (500mesh) the appearance of a particle size of less discomfort and uniformity of the particle aggregation phenomenon was found to be affected by, particle uniformity discomfort in more than 90% and aggregation phenomena that could secure the excellent appearance of merchantability.

③ more than 2 mm thick airtight containers, bins, recycle containers, such as injection molding and particle size of the powder, charcoal, 43 µm (325mesh) below the surface can be commercialized without special restrictions were irregular particles is more than 80% uniformity charcoal powder particle surface phenomena without discomfort caused by exposure to harsh excellent appearance to gain marketability was

**Experimental Example 6**

Antistatic effect test

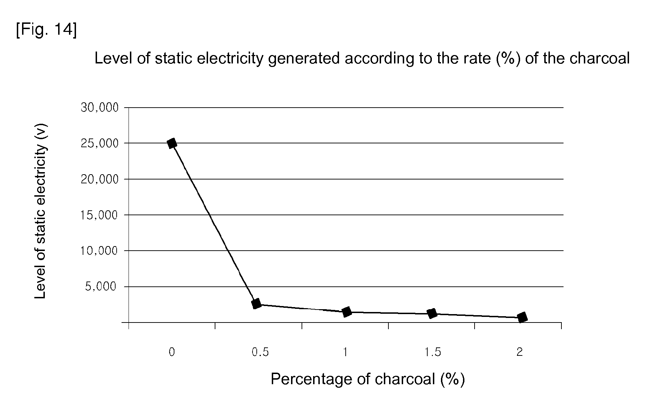

(1) manufacture polyethylene resin in the same manner as in Example 1, while the amount of charcoal contained in the powder, but 0 wt%, 0.5 wt%, 1 wt%, 1.5 wt% and 2 wt% of the film (packaging) manufacturing and electrostatic emissions were measured. Production that occurs in one package for electrostatic separation of the Great War were measured under conditions of 10% humidity, and the results are shown in Figure 14. Charcoal content 0.5%, 1%, 2% of the net reduction in the generation of static electricity as this showed the content of the charcoal content than antistatic effect the efficiency was 0.5%.

## Claims

1. A method for manufacturing a plastic packaging having charcoal power with its thickness being 0.01 mm - 0.11 mm, comprising:
mixing charcoal powder in polymer resin at a weight % of 0.2 to 1%, said charcoal powder having an average diameter less than 13 µm (1000mesh) and a particle uniformity over 95 %; and
molding said mixture of charcoal powder and polymer resin into a plastic having a thickness of 0.01 mm ~0.11 mm.

2. The method of claim 1, said step of molding said mixture comprising: blow-molding said mixture as a film.

3. A method for manufacturing a plastic packaging having charcoal power with its thickness being 0.01 mm ~0.11 mm, comprising:
mixing charcoal powder in polymer resin at a weight % of 1% to 5%, said charcoal powder having an average diameter less than 28 µm (500mesh) and a particle uniformity over 90 %; and
molding said mixture of charcoal powder and polymer resin into a plastic having a thickness of 0.12 mm ~2.0 mm.

4. The method of claim 3, said step of molding said mixture comprising: extrusion-molding said mixture as a sheet.

5. A method for manufacturing a plastic packaging having charcoal power with its thickness over 2 mm, comprising:
mixing charcoal powder in polymer resin at a weight % of 1 to 14 %, said charcoal powder having an average diameter less than 43 µm (325mesh) and a particle uniformity over 80 %; and
molding said mixture of charcoal powder and polymer resin into a plastic thicker than 2 mm.

6. The method of claim 5, said step of molding said mixture comprising: extrusion-molding said mixture as a sheet.

7. The method of any one of claims 1 to 6, said step of mixing charcoal powder mixing in a polymer resin comprises mixing and extruding said charcoal powder and said polymer resin to create a master batch.

8. The method of claim 7, wherein said polymer resin is selected from at least one of the group comprising: PE (polyethylene), PP (polypropylene), ABS (acrylonitrile butadiene styrene copolymer), OPP (Oriented Polypropylene), PET (polyethylene terephthalate), PC (polycarbonate), PS (polystyrene); PSP (polystyrene paper).
